# EUROPÄISCHE PATENTANMELDUNG

(11) **EP 0 836 081 A2**
(43) Veröffentlichungstag der Anmeldung: **15.04.1998**
(21) Anmeldenummer: 97117391.9
(22) Anmeldetag: 08.10.1997
(51) Int. Cl.: G01F 23/296, G01F 23/00

(54) **Mess- und Anzeigevorrichtung für einen Flüssigkeitsbehälter**

(30) Priorität: 08.10.1996 DE 19641339
(71) Anmelder: Döhrer, Klaus Reinhold, 59423 Unna (DE); Biermann, Klaus Peter, 59423 Unna (DE)
(72) Erfinder: Döhrer, Klaus Reinhold, 59423 Unna (DE); Biermann, Klaus Peter, 59423 Unna (DE)
(74) Vertreter: Schulze Horn & Partner

(57) **Zusammenfassung**

Die Erfindung betrifft eine Meß- und Anzeigevorrichtung für einen Flüssigkeitsbehälter (3), insbesondere Heizöltank, mit der zumindest das Unterschreiten eines vorgebbaren Flüssigkeitsniveaus im Flüssigkeitsbehälter (3) feststellbar und anzeigbar ist, wobei die Vorrichtung folgendes umfaßt:
- eine seitlich außen an einer Seitenwand (30) des Flüssigkeitsbehälters (3) anbringbare Meßeinheit (1), durch die die Seitenwand (30) in Schallschwingungen versetzbar ist und durch die diese Schallschwingungen empfangbar sind,
- eine Teil der Meßeinheit (1) bildende Auswerteeinrichtung, mit der die empfangenen Schallschwingungen auf die zwei Zustände "Flüssigkeit im Behälter (3) in Höhe der Meßeinheit (1) vorhanden" und "keine Flüssigkeit im Behälter (3) in Höhe der Meßeinheit (1) vorhanden" auswertbar sind,
- eine entfernt vom Flüssigkeitsbehälter (3) angeordnete Anzeigeeinheit (2), mit der der von der Meßeinheit (1) jeweils ermittelte Zustand anzeigbar ist, und
- eine drahtlos arbeitende Signalübertragungsstrecke zwischen der Meßeinheit (1) und der Anzeigeeinheit (2), wobei über die Signalübertragungsstrecke zumindest den jeweils ermittelten Zustand darstellende Signale übertragbar sind.

## Beschreibung

Die vorliegende Erfindung betrifft eine Meß- und Anzeigevorrichtung für einen Flüssigkeitsbehälter, insbesondere Heizöltank, mit der zumindest das Unterschreiten eines vorgebbaren Flüssigkeitsniveaus im Flüssigkeitsbehälter feststellbar und anzeigbar ist.

Aus DE 82 18 303 U1 ist eine Vorrichtung zum Messen und Anzeigen des Fluidpegels in einem Behälter bekannt, mit einer Auswerte- und Anzeigeeinheit und mit einem mit dem Behälter verbundenen mechanisch arbeitenden Impulsgeber und mit einem dem Behälter zugeordneten und vom Impulsgeber beabstandeten Impulsfühler. Der Impulsgeber und der Impulsfühler können in fester Anordnung nahe beieinander angeordnet sein und ein Baueinheit bilden, wobei die so gebildete Baueinheit vorzugsweise ortsfest an der Behälterwand, vorzugsweise am Behälterboden, befestigt ist. Alternativ kann die Baueinheit für sich am Ende eines bewegbaren Handgriffs für kurzzeitigen Einsatz an einer gewünschten Stelle der Behälterwand angeordnet sein. Weiter ist bei der bekannten Vorrichtung bevorzugt vorgesehen, daß der Impulsgeber und der Impulsfühler sowie die Auswerteeinheit und gegebenenfalls die Anzeige in einer einzigen Einheit zusammengefaßt sind. In einer dazu alternativen Ausführung besteht die Vorrichtung aus drei separaten Komponenten, nämlich der am Behälter angebrachten Baueinheit aus Impulsgeber und Impulsfühler, der damit über eine elektrische Leitung verbundenen Auswerteeinheit und der mit letzterer wiederum über eine elektrische Leitung verbundenen Anzeige.

Als nachteilig wird bei dieser bekannten Vorrichtung angesehen, daß sie in ihrer ortsfesten Ausführung schwierig zu installieren ist, weil der Impulsgeber und der Impulsfühler möglichst am Behälterboden befestigt werden sollen. Gerade hier ist in der Praxis der Zugang häufig erschwert oder unmöglich. Nur vom Behälterboden aus kann der Fluidpegel im Behälter durch die Messung der Laufzeit von Impulsen, die am Fluidspiegel reflektiert werden, gemessen werden. Außerdem erfordert diese Vorrichtung einen erheblichen Installationsaufwand, weil mehrere Teile der Vorrichtung jeweils über elektrische Leitungen miteinander verbunden werden müssen. Hier wird der Aufwand insbesondere dann hoch, wenn die Anzeige entfernt vom Standort des Behälters angeordnet werden soll, z.B. in einem anderen Raum desselben Gebäudes. Die mobile, von Hand betätigbare Ausführung der bekannten Vorrichtung besitzt den Nachteil, daß jeweils von der Bedienungsperson der Standort des Behälters aufgesucht werden muß und daß der Behälter hierfür zugänglich gehalten werden muß. Außerdem besteht bei der von Hand betätigten Ausführung die Gefahr, daß durch Handhabungsfehler falsche Meßergebnisse verursacht werden, die aber nicht ohne weiteres als fehlerhaft erkennbar sind.

Aus der DE 40 14 990 A1 ist eine Vorrichtung zur Bestimmung des Flüssigkeitsstandes einer Flüssigkeit in einem Behälter bekannt, wobei wenigstens ein einen Sender und einen Empfänger enthaltendes System zum Aussenden und Empfangen von Ultraschallwellen vorgesehen ist, das eine momentane Lage eines Punktes der Flüssigkeitsoberfläche im Bereich der Ausbreitungsbahn der Ultraschallwellen erfaßt. Weiterhin kann eine Auswerteeinheit an das System angeschlossen sein, die Mittel zum Erfassen der Laufzeit eines Ultraschallimpulses vom Sender zu einer freien Oberfläche der Flüssigkeit und weiter zum Empfänger aufweist. Da die freie Oberfläche der Flüssigkeit im ruhenden Zustand eine horizontale Ebene und auch im bewegten Zustand der Flüssigkeit im Mittelwert meist eine Ebene darstellt, muß hier das System zweckmäßig an dem Boden des zugehörigen Behälters angebracht sein. Um das Flüssigkeitsvolumen im Behälter berechnen zu können, auch wenn die Flüssigkeit sich nicht in einem Ruhezustand befindet, können an einer Wandung des Behälters, zweckmäßig an dessen Boden, mehrere Systeme angebracht sein. In einem bevorzugten Ausführungsbeispiel dieser Vorrichtung sind die Systeme auf der Innenseite der Bodenfläche des Behälters angebracht. Jedes System steht dabei mittels elektrischer Leitungen mit einer Wechselspannungsquelle in Verbindung und wird von dieser gespeist. Zusammen mit der Spannungsquelle ist an die elektrischen Leitungen zu den Systemen ein Pulsgeber angeschlossen, der periodische Wechselspannungsimpulse bildet. Jedes System ist ausgangsseitig mittels Leitungen mit einer Auswerteeinheit verbunden, die zudem an den Pulsgeber und an einen Datenspeicher angeschlossen ist. Durch reflektierte Schallwellen wird in den Empfängern eine elektrische Spannung erzeugt, die mittels weiterer elektrischer Leitungen zu einer Auswerteeinheit gelangt und dort ausgewertet wird.

Diese bekannte Vorrichtung ist sehr aufwendig und entsprechend teuer in ihrer Herstellung und Installation. Dadurch ist diese Vorrichtung für viele Einsatzzwecke nicht geeignet, z.B. für Betreiber einer Ölheizung für ein Eigenheim und dergleichen Anwendungen mit relativ geringen Anforderungen. Außerdem sind bei Anordnung eines oder mehrerer Systeme im Inneren des Behälters Durchbrüche erforderlich, die zusätzliche Arbeitsmaßnahmen erfordern und die unter Umständen die Sicherheit des Behälters beeinträchtigen können.

Es stellt sich deshalb die Aufgabe, eine Meß- und Anzeigevorrichtung der eingangs genannten Art zu schaffen, die die aufgeführten Nachteile vermeidet und die insbesondere kostengünstig herstellbar und betreibbar ist, die auf einfache Weise installierbar ist und die vielfältig, d.h. insbesondere auch im privaten Bereich, z.B. durch Betreiber von Ölheizungen, einsetzbar ist.

Die Lösung dieser Aufgabe gelingt erfindungsgemäß durch eine Vorrichtung gemäß dem Patentanspruch 1.

Vorteilhaft ist die Herstellung der erfindungsgemäßen Vorrichtung einfach, weil sie nur eine Meßeinheit benötigt, die zudem seitlich außen am Flüssigkeitsbehälter anzubringen ist, so daß weder Bohrungen oder sonstige Öffnungen am Flüssigkeitsbehälter erzeugt werden müssen noch eine Anbringung an unzugänglichen Stellen, insbesondere unter dem Boden des Flüssigkeitsbehälters, nötig ist. Auch die zugehörige Auswerteeinrichtung kann vergleichsweise einfach und damit kostengünstig ausgeführt sein, weil sie lediglich zwei Zustände unterscheiden können muß. Auch fallen vorteilhaft keine größeren, über längere Strecken verlaufende Installationsarbeiten an, da eine drahtlos arbeitende Signalübertagungsstrecke eingesetzt wird. Auch die Anzeigeeinheit kann einfach und somit kostengünstig ausgeführt sein, weil es in der einfachsten Ausführung schon ausreicht, einen der beiden festgestellten Zustände anzuzeigen. Gleichzeitig bedeutet dies, daß bei fehlender Anzeige der andere Zustand vorliegt. In der Praxis wird die Meßeinheit zweckmäßig in einer solchen Höhe am Flüssigkeitsbehälter angebracht, daß bei einem Absinken des Flüssigkeitsspiegels im Behälter unter diese Höhe noch eine gewisse Flüssigkeitsmenge für einen zeitlich begrenzten Betrieb einer zugehörigen Einrichtung, z.B. einer Öl-Zentralheizung, vorhanden ist, so daß dem Betreiber der Anlage noch ausreichend Zeit bleibt, eine Befüllung des Flüssigkeitsbehälters in die Wege zu leiten, bevor es zu Betriebsstörungen aufgrund eines Flüssigkeitsmangels im Behälter kommen kann. Die zur Vorrichtung gehörende Anzeigeeinheit ist zweckmäßig dort angeordnet, wo der Betreiber einer zugehörigen Anlage, z.B. einer Öl-Zentralheizung, sozusagen "im Vorbeigehen" ohne besondere Mühe eine Ablesung des von der Anzeigeeinheit dargestellten Zustandes vornehmen kann, z.B. in Wohnräumen. Regelmäßige Gänge in den Aufstellraum des Flüssigkeitsbehälters, z.B. einen Gebäudekeller, sowie das oft aufgrund von beengten Platzverhältnissen und schlechtem Licht schwierige Ablesen von mechanischen Flüssigkeitsstandsanzeigern entfallen somit gänzlich.

Vorteilhafte Ausgestaltungen der Meßeinheit und der Auswerteeinrichtung sind in den Ansprüchen 2 bis 4 angegeben. Vorzugsweise erfolgt die Auswertung durch Erfassung der Impuls-Antwort der durch einen Impuls zu Schwingungen angeregten Seitenwand, da sich diese Impuls-Antworten je nach Pegelstand der Flüssigkeit im Behälter relativ zur Anbringungshöhe der Meßeinheit unterscheiden, und zwar in ihrer Amplitude und/oder ihrem Frequenzspektrum.

Da in vielen Anwendungsfällen der Flüssigkeitsstand im Flüssigkeitsbehälter nur sehr langsam absinkt, ist vorzugsweise vorgesehen, daS die Meßeinheit selbsttätig in vorgebbaren Zeitabständen periodisch aktivierbar ist. Ein unnötiger Betrieb und ein unnötiger Energieverbrauch der Meßeinheit und der weiteren Teile der Vorrichtung werden so vermieden. In der Praxis genügt z.B. bei einem Öltank einer Ölheizung eine tägliche Messung vollkommen, um mit ausreichender Genauigkeit das Absinken des Heizölvorrates auf einen vorgegebenen Grenzwert, bei dem ein Nachtanken erforderlich ist, festzustellen.

Hinsichtlich der drahtlos arbeitenden Signalübertragungsstrecke schlägt die Erfindung vor, daß diese bevorzugt durch einen in die Meßeinheit integrierten Funksender und durch einen in die Anzeigeeinheit integrierten Funkempfänger gebildet ist. Auf diese Weise können Signale auch innerhalb von Gebäuden durch Zwischendecken oder Wände übertragen werden. Die Reichweite der Funksender-Empfänger-Anordnung kann dabei aber auf Bereiche begrenzt werden, die den Dimensionen üblicher Gebäude entsprechen, beispielsweise etwa 30 m. Damit können auch die Mittel für die Realisierung der Signalübertragungsstrecke einfach und kostengünstig ausgeführt sein.

Zur weiteren Reduzierung des Installationsaufwandes wird weiter vorgeschlagen, daß die Meßeinheit mittels mindestens einer Batterie netzunabhängig betreibbar ist. Sofern die Meßeinheit nur in relativ großen Zeitabständen jeweils kurzfristig aktiviert wird und sofern, was heute technisch kein Problem darstellt, stromsparende Schaltungen für die Meßeinheit verwendet werden, lassen sich lange Betriebszeiten erreichen, die in der Praxis mit einer einzigen Batterie mehr als ein Jahr lang sein können. Außer einem Batterietausch in bestimmten Zeitabständen ist keine weitere Wartung der Meß- und Anzeigevorrichtung gemäß Erfindung erforderlich, weil sie keinerlei bewegliche und somit verschleißanfällige Teile enthält.

Ergänzend können über die Signalübertragungsstrecke auch die Betriebsbereitschaft und/oder den aktuellen Betriebszustand der Meßeinheit sowie gegebenenfalls den aktuellen Ladezustand der Batterie darstellende Signale übertragbar sein und von der Anzeigeeinheit zusätzlich die Betriebsbereitschaft und/oder der aktuelle Betriebszustand der Meßeinheit und/oder gegebenenfalls der Ladezustand der Batterie anzeigbar sein. In dieser Ausgestaltung ist schon an der Anzeigeeinheit erkennbar, ob die Meß- und Anzeigevorrichtung störungsfrei arbeitet oder ob Störungen vorliegen oder ein Batteriewechsel erforderlich ist.

Um die notwendige Aufmerksamkeit zu erzeugen, ist vorgesehen, daß die Anzeigeeinheit optische und/oder akustische Anzeigemittel aufweist. Die optischen Anzeigemittel können beispielsweise Leuchtmelder sein, die bei Bedarf auch durch unterschiedliche Farben unterschiedliche Anzeigen abgeben können. Ergänzend oder alternativ können Tonsignale abgebbar sein, um hiermit die optisch dargestellten Anzeigen zu ergänzen oder weitere Zustände anzeigen zu können.

Um die Meß- und Anzeigevorrichtung möglichst klein und kostengünstig ausführen zu können, ist vorgesehen, daß die Meßeinheit mindestens einen Mikrochip mit Programm- und Datenspeicher umfaßt. In einem solchen Mikrochip können alle Programme und Daten für den Betrieb der Meßeinheit einschließlich der darin integrierten Auswerteeinrichtung gespeichert werden, was eine kostengünstige Massenfertigung bei sehr geringem Platzbedarf gewährleistet.

Eine weitere Maßnahme zur Reduzierung des Herstellungs- und Installationsaufwandes besteht darin, daß die Meßeinheit einschließlich der zugehörigen Auswerteeinheit, der zugehörigen Teile der Signalübertragungsstrecke und gegebenenfalls der zugehörigen Batterie innerhalb eines einzigen Gehäuses untergebracht ist, das schalleitend an dem Flüssigkeitsbehälter anbringbar ist.

Bevorzugte Arten der Anbringung des Gehäuses am Flüssigkeitsbehälter bestehen dabei darin, daß diese durch eine Verklebung oder Verschweißung oder magnetisch erfolgt. Alle Anbringungsarten sind schnell und einfach ausführbar und erfordern keinerlei Eingriffe in die Behälterwand, die diese schwächen könnten. Außerdem kann so das Gehäuse mit den darin befindlichen Teilen der Meß- und Anzeigevorrichtung bei Bedarf wieder von dem Flüssigkeitsbehälter entfernt und an anderer Stelle verwendet werden.

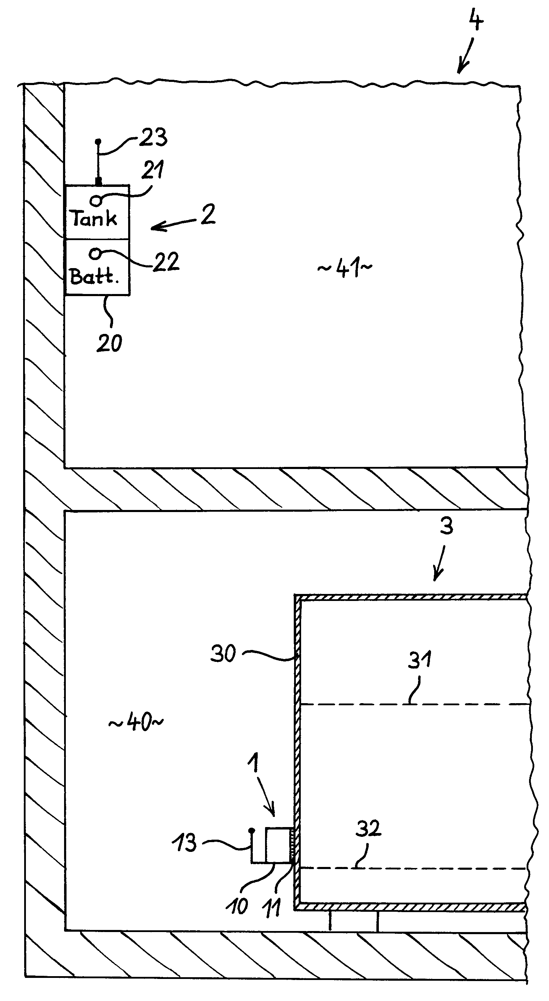

Ein Ausführungsbeispiel der Erfindung wird im folgenden anhand einer Zeichnung erläutert. Die einzige Figur der Zeichnung zeigt eine Meß- und Anzeigevorrichtung, deren Meßeinheit an einem im Keller eines Gebäudes angeordneten Flüssigkeitsbehälter angebracht ist und deren Anzeigeeinheit sich in einem anderen Raum desselben Gebäudes befindet, wobei das Gebäude sowie der Flüssigkeitsbehälter in einem schematisierten Vertikalschnitt dargestellt sind.

Im unteren Teil der Zeichnungsfigur ist ein Kellerraum 40 erkennbar, an den sich nach oben hin ein durch eine Zwischendecke abgetrennter Wohnraum 41 anschließt. Der Kelleraum 40 und der Wohnraum 41 bilden Teile eines im übrigen nicht weiter dargestellten Gebäudes 4.

Im Kellerraum 40 ist ein Flüssigkeitsbehälter 3, hier ein Öltank, angeordnet, der aus einem Boden, einer Decke und vier Seitenwänden 30 besteht. An der in der Zeichnungsfigur links liegenden Seitenwand 30 des Behälters 3 ist eine Meßeinheit 1 außen angebaut, die Teil einer Meß- und Anzeigevorrichtung bildet. Die Meßeinheit 1 besitzt ein Gehäuse 10, das hier durch eine Verklebung 11 an der Seitenwand 30 befestigt ist. Im Inneren des Gehäuses 10 befinden sich Mittel zum Aussenden und Empfangen von Schallwellen, eine Auswerteeinrichtung und ein Funksender. Zum Aussenden von Funksignalen besitzt der Funksender eine außerhalb des Gehäuses 10 angeordnete Antenne 13.

Mittels der Meßeinheit 1 ist durch eine elektrische oder elektronische Auswertung der ausgesandten und empfangenen Schallwellen eine Feststellung möglich, ob der Flüssigkeitsstand innerhalb des Flüssigkeitsbehälters 3 auf einem Niveau oberhalb der Meßeinheit 1, z.B. auf einem Niveau 31, oder unterhalb der Meßeinheit 1, z.B. auf einem Niveau 32 liegt. Die Meßeinheit 1 unterscheidet demnach zwei Zustände, nämlich "Flüssigkeit im Behälter in Höhe der Meßeinheit vorhanden" und "keine Flüssigkeit im Behälter in Höhe der Meßeinheit vorhanden". Entsprechend dem jeweils festgestellten Zustand sendet der Teil der Meßeinheit 1 bildende Funksender über seine Antenne 13 ein entsprechendes Signal aus. Dieses Funksignal breitet sich entsprechend den Gesetzen der Ausbreitung elektromagnetischer Wellen aus, unter anderem auch innerhalb des Gebäudes 4 nach oben in den Wohnraum 41. In diesem Wohnraum befindet sich als zweiter Teil der Meß- und Anzeigevorrichtung eine Anzeigeeinheit 2, die hier als Wandgerät ausgeführt ist und an einer der Wände des Raumes 41 angebracht ist. Diese Anzeigeeinheit umfaßt neben zwei Anzeigen 21, 22 einen integrierten Funkempfänger, zu dem eine auf die Anzeigeeinheit 2 aufgebaute Funkantenne 23 gehört. Mittels diese Funkantenne 23 ist die Anzeigeeinheit 2 zum Empfang der von der Meßeinheit 1 ausgesandten Signale befähigt, die dann eine entsprechende Stellung oder Aktivierung der Anzeigen 21, 22 bewirken. Im vorliegenden Ausführungsbeispiel sind die Anzeigen 21, 22 Leuchtanzeigen, z.B. Miniaturlampen oder Leuchtdioden. Die im Beispiel obere Anzeige 21 dient dazu, das Absinken des Flüssigkeitsstandes innerhalb des Behälters 3 auf ein Niveau unterhalb der Meßeinheit 1 zu signalisieren, wodurch dem Betreiber der zum Flüssigkeitsbehälter 3 gehörenden Anlage, z.B. eine Öl-Zentralheizung, signalisiert wird, daß ein Nachfüllen des Behälters, z.B. ein Nachtanken von Heizöl, angebracht ist.

Ergänzend umfaßt hier die Anzeigeeinheit 2 als zweite Anzeige 22 eine Batterie-Kontrollanzeige, die insbesondere dann aktiviert wird, wenn die in die Meßeinheit 1 integrierte Batterie ersetzt werden muß. Durch diese in die Meßeinheit 1 integrierte Batterie ist ein netzunabhängiger Betrieb der Meßeinheit 1 möglich, so daß Installationsarbeiten insbesondere im Aufstellungsraum des Flüssigkeitsbehälters 3, abgesehen von der Anbringung des Gehäuses 10 an der Seitenwand 30 des Behälters 3, entfallen.

Die Anzeigeeinheit 2 kann ebenso für einen Batteriebetrieb ausgelegt sein; alternativ ist auch ein Netzbetrieb oder ein durch eine Batterie oder einen Akkumulator gepufferter Netzbetrieb möglich. Für den Betrieb der Anzeigeeinheit 2 wird dann höchstens ein Netzanschluß benötigt, der im einfachsten Fall durch eine vorhandene Steckdose gewährleistet ist. Leitungsverbindungen zwischen der Meßeinheit 1 am Flüssigkeitsbehälter 3 und der Anzeigeeinheit 2 in dem davon entfernt liegenden Raum 41 sind in keinem Fall erforderlich, da eine drahtlose Signalübertragungsstrecke verwendet wird, deren Reichweite den jeweiligen Bedürfnissen angepaßt werden kann.

## Patentansprüche

1. Meß- und Anzeigevorrichtung für einen Flüssigkeitsbehälter (3), insbesondere Heizöltank, mit der zumindest das Unterschreiten eines vorgebbaren Flüssigkeitsniveaus im Flüssigkeitsbehälter (3) feststellbar und anzeigbar ist, wobei die Vorrichtung folgendes umfaßt:
- eine seitlich außen an einer Seitenwand (30) des Flüssigkeitsbehälters (3) anbringbare Meßeinheit (1), durch die die Seitenwand (30) in Schallschwingungen versetzbar ist und durch die diese Schallschwingungen empfangbar sind,
- eine Teil der Meßeinheit (1) bildende Auswerteeinrichtung, mit der die empfangenen Schallschwingungen auf die zwei Zustände "Flüssigkeit im Behälter (3) in Höhe der Meßeinheit (1) vorhanden" und "keine Flüssigkeit im Behälter (3) in Höhe der Meßeinheit (1) vorhanden" auswertbar sind,
- eine entfernt vom Flüssigkeitsbehälter (3) angeordnete Anzeigeeinheit (2), mit der der von der Meßeinheit (1) jeweils ermittelte Zustand anzeigbar ist, und
- eine drahtlos arbeitende Signalübertragungsstrecke zwischen der Meßeinheit (1) und der Anzeigeeinheit (2), wobei über die Signalübertragungsstrecke zumindest den jeweils ermittelten Zustand darstellende Signale übertragbar sind.

2. Meß- und Anzeigevorrichtung nach Anspruch 1, dadurch gekennzeichnet, daß von der Meßeinheit (1) mindestens ein Schwingungsimpuls erzeugbar ist.

3. Meß- und Anzeigevorrichtung nach Anspruch 2, dadurch gekennzeichnet, daß in der Meßeinheit (1) eine bewegliche, impulsartig auslenkbare, mittelbar oder unmittelbar an die Seitenwand (30) anschlagende Masse vorgesehen ist.

4. Meß- und Anzeigevorrichtung nach einem der vorangehenden Ansprüche, dadurch gekennzeichnet, daß in der Auswerteeinrichtung die von der Meßeinheit (1) empfangenen Schallschwingungen der Seitenwand (30) durch Amplituden- und/oder Frequenzanalyse und -vergleich auswertbar sind.

5. Meß- und Anzeigevorrichtung nach einem der vorangehenden Ansprüche, dadurch gekennzeichnet, daß die Meßeinheit (1) selbsttätig in vorgebbaren Zeitabständen periodisch aktivierbar ist.

6. Meß- und Anzeigevorrichtung nach einem der vorangehenden Ansprüche, dadurch gekennzeichnet, daß die Signalübertragungsstrecke durch einen in die Meßeinheit (1) integrierten Funksender und durch einen in die Anzeigeeinheit (2) integrierten Funkempfänger gebildet ist.

7. Meß- und Anzeigevorrichtung nach einem der vorangehenden Ansprüche, dadurch gekennzeichnet, daß die Meßeinheit (1) mittels mindestens einer Batterie netzunabhängig betreibbar ist.

8. Meß- und Anzeigevorrichtung nach einem der vorangehenden Ansprüche, dadurch gekennzeichnet, daß über die Signalübertragungsstrecke auch die Betriebsbereitschaft und/oder den aktuellen Betriebszustand der Meßeinheit (1) sowie gegebenenfalls den aktuellen Ladezustand der Batterie darstellende Signale übertragbar sind und daß von der Anzeigeeinheit (2) zusätzlich die Betriebsbereitschaft und/oder der aktuelle Betriebszustand der Meßeinheit (1) und/oder gegebenenfalls der Ladezustand der Batterie anzeigbar ist.

9. Meß- und Anzeigevorrichtung nach einem der vorangehenden Ansprüche, dadurch gekennzeichnet, daß die Anzeigeeinheit (2) optische und/oder akustische Anzeigemittel (21, 22) aufweist.

10. Meß- und Anzeigevorrichtung nach einem der vorangehenden Ansprüche, dadurch gekennzeichnet, daß die Meßeinheit (1) mindestens einen Mikrochip mit Programm- und Datenspeicher umfaßt.

11. Meß- und Anzeigevorrichtung nach einem der vorangehenden Ansprüche, dadurch gekennzeichnet, daß die Meßeinheit (1) einschließlich der zugehörigen Auswerteeinheit, der zugehörigen Teile der Signalübertragungsstrecke und gegebenenfalls der zugehörigen Batterie innerhalb eines einzigen Gehäuses (10) untergebracht ist, das schalleitend an dem Flüssigkeitsbehälter (3) anbringbar ist.

12. Meß- und Anzeigevorrichtung nach Anspruch 11, dadurch gekennzeichnet, daß die Anbringung des Gehäuses (10) am Flüssigkeitsbehälter (3) durch eine Verklebung (11) oder durch eine Verschweißung oder magnetisch erfolgt.
